# EUROPÄISCHE PATENTSCHRIFT

(11) **EP 1 432 547 B1**
(45) Veröffentlichungstag und Bekanntmachung des Hinweises auf die Patenterteilung: **28.02.2007**
(21) Anmeldenummer: 02782797.1
(22) Anmeldetag: 26.09.2002
(51) Int. Cl.: B23K 33/00, B23K 37/06, B23K 37/053

(54) **DREI MIT EINER SCHWEISSVERBINDUNG VERBUNDENE BAUTEILE**
THREE COMPONENTS LINKED TO EACH OTHER BY MEANS OF A WELDED CONNECTION
TROIS ELEMENTS RELIES PAR UNE SOUDURE

(30) Priorität: 04.10.2001 DE 10149167
(43) Veröffentlichungstag der Anmeldung: 30.06.2004
(73) Patentinhaber: Endress + Hauser GmbH + Co. KG, 79689 Maulburg (DE)
(72) Erfinder: KASTNER, Bernd, 79650 Schopfheim (DE)
(74) Vertreter: Andres, Angelika Maria
(86) Internationale Anmeldenummer: PCT/EP2002/010784
(87) Internationale Veröffentlichungsnummer: WO 2003/031112

(56) Entgegenhaltungen:
- EP-A- 1 025 943
- EP-A- 1 025 944

## Beschreibung

Die Erfindung betrifft drei mit einer Schweißverbindung verbundene Bauteile und ein Verfahren zur Herstellung einer solchen Verbindung.

Schweißverbindungen zwischen drei Bauteilen sind sehr weit verbreitet.

Sie bestehen z.B. immer dann, wenn zwei Bauteile paßgenau ohne Kantenversatz mit Hilfe einer Zentrierbuchse aneinander geschweißt werden. Hierbei werden z.B. ein Endstück des ersten Bauteils und ein Endstück des zweiten Bauteils jeweils so auf die Zentrierbuchse aufgeschoben, daß die beiden Endstücke eng aneinander anliegen. Die Zentrierbuchse weist hierzu eine Form auf, die der Form der Endstücke angepaßt ist. Anschließend wird z.B. mittels eines Schweißbrenners eine einzige ringförmige Schweißnaht gezogen (Siehe US-A-2 681 028).

Eine nahezu identische Schweißverbindung wird eingesetzt, wenn mittels einer Badsicherung ein Wurzeldurchgang bzw. ein Durchtropfen von beim Schweißvorgang aufgeschmolzenem Material in einen durch zwei zu verbindende Bauteile gebildeten Innenraum verhindert werden soll. Die Form der Badsicherung entspricht im wesentlichen der Form des Zentrierrings.

Eine analoge Schweißverbindung besteht natürlich, wenn drei an einer Verbindungslinie aneinander angrenzende Bauteile miteinander verbunden sind.

In allen vorgenannten Fällen bildet die Schweißnaht eine geschlossene Linie. Dabei tritt sehr häufig das Problem auf, daß dort, wo ein Schweißnahtende auf einen Anfang der Schweißnaht trifft Poren entstehen. Poren in der Schweißnaht führen zu einer verringerten mechanischen Festigkeit und zu einer geringeren Korrosionsbeständigkeit der Schweißverbindung. Außerdem kann die Druckfestigkeit der Verbindung beeinträchtigt sein. Letzteres bereitet z.B. Probleme, wenn die Schweißverbindung einen Teil einer druckfesten Kapselung bildet.

Zwar läßt sich die Porenhäufigkeit erheblich reduzieren, indem man den Schweißvorgang drastisch verlangsamt, z.B. auf Schweißgeschwindigkeiten unter 6 cm/min, dies ist jedoch für viele Anwendungen unwirtschaftlich.

Es ist eine Aufgabe der Erfindung, drei miteinander durch eine porenfreie Schweißung verbunde Bauteile anzugeben.

Hierzu besteht die Erfindung in einem ersten, einem zweiten und einem dritten Bauteil,
- die miteinander mittels einer einzigen geschlossenen Schweißnaht verbunden sind, und
- von denen ein Bauteil an einem Anfangs- und Endpunkt der Schweißnaht eine Ausnehmung aufweist, die dazu dient, daß ein Schweißbad wurzelseitig entgasen kann.
   Gemäß einer ersten Ausgestaltung ist das dritte Bauteil ein Zentrierring, auf den das erste und das zweite Bauteil aufgeschoben sind.
   Gemäß einer zweiten Ausgestaltung ist das dritte Bauteil eine Badsicherung, auf die das erste und das zweite Bauteil aufgeschoben sind.
   Gemäß einer dritten Ausgestaltung ist das erste Bauteil eine Membran, das zweite Bauteil ein Rohr und das dritte Bauteil eine in das Rohr eingesteckte Halterung.
   Weiter besteht die Erfindung in einem Verfahren zur Herstellung einer der vorgenannten Schweißverbindungen,
   bei dem
- das erste, das zweite und das dritte Bauteil vormontiert werden,
- die Schweißung in Bereich der Ausnehmung begonnen wird,
- kontinuierlich durchgeführt wird, und
- dort beendet wird, wo sie im Bereich der Ausnehmung begonnen wurde.

Die Erfindung und weitere Vorteile werden nun anhand der Figuren der Zeichnung, in denen drei Ausführungsbeispiel von Schweißverbindungen dargestellt sind, näher erläutert; gleiche Elemente sind in den Figuren mit denselben Bezugszeichen versehen.
- Fig. 1: zeigt eine Schweißverbindung zwischen zwei zylindrischen Bauteilen und einem Zentrierring bzw. einer Badsicherung;
- Fig. 2: zeigt einen Schnitt durch den Zentrierring bzw. die Badsicherung in der in Fig. 1 durch den Pfeil A gekennzeichneten Ebene;
- Fig. 3: zeigt eine Ansicht des Zentrierrings bzw. der Badsicherung von einer in Fig. 1 durch den Pfeil A markierten Seite her;
- Fig. 4: zeigt eine Schweißverbindung zwischen einer Membran, einem Rohr und einer innenliegenden Halterung; und
- Fig. 5: zeigt eine Ansicht der Halterung von Fig. 4 von einer in Fig. 4 durch den Pfeil A markierten Seite her.

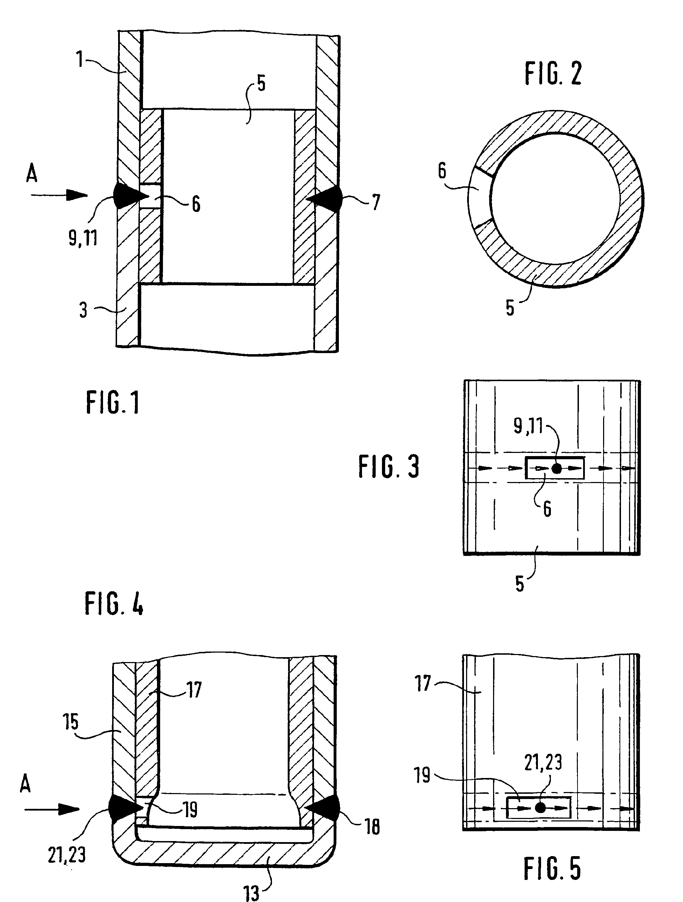

Fig. 1 zeigt eine Schnittzeichnung einer Schweißverbindung zwischen einem ersten, einem zweiten und einem dritten Bauteil 1, 3, 5. Das erste und das zweite Bauteil 1, 3 sind Zylinder gleichen Innendurchmessers, die endseitig aneinander angrenzen. Das dritte Bauteil 5 ist ebenfalls ein Zylinder. Er weist einen Außendurchmesser auf, der gleich dem Innendurchmesser des ersten und des zweiten Bauteils 1, 3 ist.

Das erste und das weite Bauteil sind jeweils auf das dritte Bauteil 5 aufgeschoben, derart, daß sie eng aneinander und an dem dritten Bauteil 5 anliegen.

Das dritte Bauteil 5 weist eine Ausnehmung 6 auf, die einer wurzelseitigen Entgasung eines Schweißbades beim Schweißvorgang dient. Fig. 2 zeigt einen Schnitt durch das dritte Bauteil 5 in einer in Fig. 1 mit A bezeichneten Schnittebene. Fig. 3 zeigt eine Ansicht des dritten Bauteils 5 von einer in Fig. 1 durch den Pfeil A eingezeichneten Seite her. Die Ausnehmung 6 ist in dem dargestellten Ausführungsbeispiel ein durchgehender Schlitz mit rechteckförmigem Querschnitt.

Die drei Bauteile 1, 3, 5 sind mittels einer geschlossenen Schweißnaht 7 miteinander verbunden. Die Schweißnaht 7 ist hier ringförmig und beginnt an einem Anfangspunkt 9, der im Bereich der Ausnehmung 6 liegt. Vorzugsweise liegt der Anfangspunkt 9 im Bereich der Mitte der Ausnehmung 6. An diesem Anfangspunkt 9 werden das erste und das zweite Bauteil 1, 3 miteinander verschweißt. Ausgehend von dort verläuft die Schweißnaht 7 rings um die drei Bauteile 1, 3, 5 und verbindet alle drei Bauteile 1, 3, 5 und endet an einem Endpunkt 11, der gleich dem Anfangspunkt 9 ist.

In Fig. 3 ist die Lage der Schweißnaht 7 durch Pfeile dargestellt. Die Pfeilrichtung gibt die Schweißrichtung beim Schweißvorgang an. Anfangs- und Endpunkt 9, 11 der Schweißnaht 7 liegen auf der Ausnehmung 6 und sind durch einen dicken Punkt dargestellt.

Hergestellt wird eine erfindungsgemäße Schweißverbindung indem die drei Bauteile 1, 3, 5 vormontiert werden. Anschließend wird mit der Schweißung in Bereich der Ausnehmung 6 begonnen, z.B. indem der Schweißbrenner an dem Anfangspunkt 9 angesetzt wird. Es wird dann die Schweißnaht 7 gezogen, indem die Schweißung kontinuierlich durchgeführt wird, und am Endpunkt 11 dort beendet wird, wo sie im Bereich der Ausnehmung 6 begonnen wurde.

Am Anfangs- und Endpunkt 9, 11 besteht ein kritischer Punkt für eine mögliche Porenbildung. Bei der erfindungsgemäßen Schweißverbindung besteht deshalb genau an diesem Ort eine Ausnehmung 6 im dritten Bauteil 5. Die Ausnehmung sorgt während des Schweißvorganges für eine ausreichende wurzelseitige Entgasung eines Schmelzbades. Dadurch ist sichergestellt, daß praktisch keine Poren mehr auftreten. Die Schweißverbindung weist somit eine sehr hohe mechanische Festigkeit und eine gute Korrosionsbeständigkeit auf. Erfindungsgemäße Schweißverbindungen können daher auch zur Realisierung einer druckfesten Kapselung eingesetzt werden.

Die Erfindung ist sehr vielseitig einsetzbar. Das erste und das zweite Bauteil 1, 3 sind z.B. miteinander verbundene Teile einer Rohrleitung. Genauso können das erste und das zweite Bauteil 1, 3 aber auch beliebig geformte andere Bauteile, z.B. Teile eines Gehäuses eines Meßgeräts o.ä. sein, die ein zylindrisches Endstück aufweisen.

Das dritte Bauteil 5 kann z.B. ein Zentrierring sein, der dazu dient, das erste und das zweite Bauteil 1, 3 paßgenau ohne Kantenversatz zueinander anzuordnen. Ebenso kann das dritte Bauteil 5 auch eine Badsicherung sein, die dazu dient zu verhindern, daß beim Verschweißen ein Wurzeldurchgang bzw. ein Durchtropfen von aufgeschmolzenem Material in den Innenraum des ersten und des zweiten Bauteils 1, 3 eindringt. Auch hierbei sind das erste und das zweite Bauteil 1, 3 auf die Badsicherung aufgeschoben.

In Fig. 4 ist ein weiteres Ausführungsbeispiel einer erfindungsgemäßen Schweißverbindung dargestellt. Diese weist ein erstes, ein zweites und ein drittes Bauteil 13, 15, 17 auf. Das erste Bauteil 13 ist eine Membran, das zweite Bauteil 15 ein Rohr und das dritte Bauteil 17 ist eine in das Rohr eingesteckte Halterung. Die Membran schließt das Rohr topfartig ab und liegt mit einer ringscheibenförmigen Stirnfläche an einer formgleichen Stirnfläche des Rohres an. Das dritte Bauteil 17, die Halterung, ist in das zweite Bauteil 15 eingeführt und liegt mit einer äußeren Mantelfläche im Bereich der beiden Stirnflächen eng an dem ersten und dem zweiten Bauteil 13, 15 an.

Die Membran ist z.B. Teil eines Sensors oder Meßaufnehmers, das Rohr beispielsweise ein Montagerohr zur Befestigung des Sensors bzw. Meßaufnehmers, und die Halterung kann eine Halterung für eine Meß- und/oder Auswerteelektronik sein.

Auf der Höhe der beiden Stirnflächen verläuft eine geschlossene Schweißnaht 18, durch die das erste, das zweite und das dritte Bauteil 13, 15, 17 miteinander verbunden sind. Erfindungsgemäß weist auch hier ein Bauteil, in dem gezeigten Ausführungsbeispiel das dritte Bauteil 17, eine Ausnehmung 19 auf, die sich an einem Anfangs- und Endpunkt 21, 23 der Schweißnaht 18 befindet und dazu dient, daß das Schweißbad wurzelseitig entgasen kann. Fig. 5 zeigt eine Ansicht der Halterung von Fig. 4 von einer in Fig. 4 durch den Pfeil A markierten Seite her.

## Patentansprüche

1. Schweißverbindung zwischen einem ersten, einem zweiten und einem dritten Bauteil (1, 3, 5, 13, 15, 17)
- die mittels einer geschlossenen Schweißnaht (7, 18) miteinander verbunden sind, **dadurch gekennzeichnet, daß** einer der Bauteile (5, 17) an einem Anfangs- und Endpunkt (9, 11, 21, 23) der Schweißnaht (7, 18) eine Ausnehmung (6, 19) aufweist, die dazu dient, daß ein Schweißbad wurzelseitig entgasen kann.

2. Schweißverbindung nach Anspruch 1, bei dem das dritte Bauteil (5) ein Zentrierring ist, auf den das erste und das zweite Bauteil (1, 3) aufgeschoben sind.

3. Schweißverbindung nach Anspruch 1, bei dem das dritte Bauteil (5) eine Badsicherung ist, auf die das erste und das zweite Bauteil (1, 3) aufgeschoben sind.

4. Schweißverbindung nach Anspruch 1, bei dem das erste Bauteil (13) eine Membran, das zweite Bauteil (15) ein Rohr und das dritte Bauteil (17) eine in das Rohr eingesteckte Halterung ist.

5. Verfahren zur Herstellung einer Schweißverbindung nach einem der vorangehenden Ansprüche, bei dem
- das erste, das zweite und das dritte Bauteil (1, 3, 5, 13, 15, 17) vormontiert werden,
- die Schweißung in Bereich der Ausnehmung (6, 19) begonnen wird,
- kontinuierlich durchgeführt wird, und
- dort beendet wird, wo sie im Bereich der Ausnehmung (6, 19) begonnen wurde.

## Claims

1. A weld joint between a first, a second and a third component (1, 3, 5, 13, 15, 17)
- which are connected to one another by means of a closed weld seam (7, 18), **characterised in that** one of the components (5, 17) has, at a start and end point 9, 11, 21, 23) of the weld seam (7, 18), a cutout (6, 19) which serves to enable the degassing of a weld pool at the root side.

2. A weld joint according to Claim 1, in which the third component (5) is a centring ring onto which the first and the second component (1, 3) are pushed.

3. A weld joint according to Claim 1, in which the third component (5) is a weld pool backing onto which the first and the second component (1, 3) are pushed.

4. A weld joint according to Claim 1, in which the first component (13) is a membrane, the second component (15) is a pipe and the third component (17) is a mount inserted into the pipe.

5. A process for producing a weld joint according to one of the preceding claims, in which
- the first, the second and the third component (1, 3, 5, 13, 15, 17) are pre-assembled,
- the welding procedure is started in the region of the cutout (6, 19),
- implemented continuously, and
- terminated at the point where it was started in the region of the cutout (6, 19).

## Revendications

1. Assemblage soudé entre une première, une deuxième et une troisième pièce (1, 3, 5, 13, 15, 17)
- qui sont reliées entre elles au moyen d'un cordon de soudure (7, 18) fermé, **caractérisé en ce que** l'une des pièces (5, 17) présente en un point initial et final (9, 11, 21, 23) du cordon de soudure (7, 18) une cavité (6, 19), qui sert à pouvoir dégazer le bain de fusion au niveau de la racine.

2. Assemblage soudé selon la revendication 1, pour lequel la troisième pièce (5) est une bague de centrage, sur laquelle la première et la deuxième pièce (1, 3) sont engagées.

3. Assemblage soudé selon la revendication 1, pour lequel la troisième pièce (5) est une protection du bain de fusion, sur laquelle la première et la deuxième pièce (1, 3) sont engagées.

4. Assemblage soudé selon la revendication 1, pour lequel la première pièce (13) est une membrane, la deuxième pièce un tube (15) et la troisième pièce (17) un support introduit dans le tube.

5. Procédé destiné à la fabrication d'un assemblage soudé selon l'une des revendications précédentes, au cours duquel
- la première, la deuxième et la troisième pièce (1, 3, 5, 13, 15, 17) sont prémontées,
- le soudage est commencé dans la zone de la cavité (6, 19),
- réalisé de façon continue et
- s'arrête au niveau de la cavité (6, 19), où il a été commencé.
